# EUROPÄISCHE PATENTANMELDUNG

(11) **EP 1 160 724 A2**
(43) Veröffentlichungstag der Anmeldung: **05.12.2001**
(21) Anmeldenummer: 01110958.4
(22) Anmeldetag: 07.05.2001
(51) Int. Cl.: G06K 19/067, G06K 19/077

(54) **Kontaktanordnung für mehrkomponentige Smart Cards**

(30) Priorität: 20.05.2000 DE 10025147
(71) Anmelder: Orga Kartensysteme GmbH, 33104 Paderborn (DE)
(72) Erfinder: König, Karl-Heinz, Dr., 24220 Flintbek (DE)

(57) **Zusammenfassung**

Die Erfindung betrifft eine Kontaktanordnung für mehrkomponentige Smart Cards. Ihr liegt die Aufgabe zu Grunde, eine derartige Kontaktanordnung fertigungstechnisch einfachen Aufbaus zu schaffen, die Kontaktflächen für eine externe Kontaktierung der Karte ausbildet und gleichzeitig eine Verbindung der in einer oder mehreren Ebenen in den Kartenkörper eingeordneten Leiterbahnen (4) ermöglicht, welche die elektrischen und/oder elektronischen Komponenten der Smart Card untereinander verschalten.

Die Aufgabe wird durch eine Kontaktanordnung gelöst, welche aus einer in einer Aussparung des Kartenkörpers eingebrachten Kontakteinheit, galvanischen Kontaktflächen auf den Leiterbahnen sowie diese Kontaktflächen mit der Kontakteinheit verbindenden Kontaktierungselementen (2) besteht. Auf der dem Kartenkörper abgewandten Oberfläche der Kontakteinheit (1) sind durch entsprechende Strukturierung einer auf einen Träger aufgebrachten Metallisierungsschicht (7) mehrere ISO-Kontakte (5) ausgebildet, welche auf ihrer dem Kartenkörper zugewandten Rückseite die Kontaktierungselemente (2) zur Verbindung der Kontakteinheit mit den Leiterbahnen in Form aufgebrachter Erhöhungen (Bumps) aufweisen. Die Bumps sind mit den Kontaktflächen (3) der unterhalb der ISO-Kontakte (5) an die Kontakteinheit (1) herangeführten Leiterbahnen (4) kontaktiert.

## Beschreibung

Die Erfindung betrifft eine Kontaktanordnung für mehrkomponentige Smart Cards, welche zur Verbindung von in einer oder mehreren Ebenen in den Kartenkörper angeordneten, die elektrischen und/oder elektronischen Komponenten der Smart Card untereinander verschaltenden Leiterbahnen sowie zur Bildung von Kontaktflächen für eine externe Kontaktierung der Karte zum Zwecke des Datenaustausches mit einem Hostsystem dient.

Gegenwärtig ist eine Vielzahl von Chipkarten für unterschiedlichste Zwecke, beispielsweise als Identifikationsmittel oder zur Speicherung anderer personengebundener Daten, im Einsatz. Die Speicherung und teilweise auch Verarbeitung der Daten erfolgt auf einem Mikrochip, welcher in einen in der Regel aus PVC ( oder ABS) bestehenden Kartenkörper integriert ist. Zum Schutz des Mikrochips bei der Fertigung der Karte und während ihres späteren Einsatzes wird dieser in Form einer modularen, den Chip in der Art eines Gehäuses aufnehmenden Einheit in den Kartenkörper eingebracht, welche gleichzeitig der externen Kontaktierung des Chips und damit der Karte bei deren Benutzung für einen Datenaustausch mit einem Host-system dient. Die modulare Einheit ist als eine aus einem Träger mit einer Metallisierungsschicht bestehende Kontakteinheit ausgebildet, mit welcher der von einer schützenden Abdeckung umgebene Chip über entsprechende Anschlüsse leitend verbunden ist. Die üblicherweise 6 oder 8 Kontakte zur externen Kontaktierung der den Chip aufnehmenden modularen Einheit werden durch eine entsprechende Strukturierung der Metallisierungsschicht der Kontakteinheit realisiert.

Zur Herstellung der Verbindung zwischen der Kontakteinheit und dem Mikrochip sind unterschiedliche Technologien bekannt. Sehr weit verbreitet ist die so genannte Flip-Chip-Technologie. Eine entsprechende, diese Technologie nutzende Anordnung ist beispielsweise aus der DE 197 08 617 C2 bekannt. Bei dieser Technologie wird der Chip an speziellen Kontaktpunkten auf seiner der Kontakteinheit zugewandten Oberfläche mit der strukturierten Kontakteinheit verbunden. Zur Ausbildung der Kontaktierungspunkte für die Verbindung des Chips mit der Kontakteinheit ist es dabei bekannt, geeignete galvanisch leitende Erhöhungen (so genannte "Bumps") auf den hierfür vorgesehenen Kontaktflächen der Oberfläche des Mikrochips zu erzeugen. Eine entsprechende, derartige Bumps verwendende Anordnung zur Verbindung eines Chips mit einem Trägerelement ist beispielsweise in der DE 44 41 052 A1 beschrieben. Die Schrift offenbart eine Technologie zur Kontaktierung des Mikrochips an einer Kontakteinheit, bei welcher die Anschlusspunkte auf dem Chip als Erhebungen aus einem elektrisch leitenden Material in Form eines leitfähigen Klebers, einer schmelzbaren Legierung oder einer Lotpaste ausgebildet sind. Die Verwendung von Bumps zur Schaffung von Kontaktierungspunkten ist außerdem bereits im Zusammenhang mit der Kontaktierung so genannter oberflächenmontierter Bauelemente (SMD - Surface Mounted Devices) auf Leiterplatten oder auf Trägern von Hybridbauelementen bekannt.

Im Zuge einer Erhöhung der Funktionalität der Chipkarten und unter Nutzung der ständig steigenden Möglichkeiten der Miniaturisierung ist es inzwischen auch bekannt, periphere, mit dem Chip zusammenarbeitende Komponenten, wie beispielsweise Displays, Batterien oder andere optische bzw. elektrische/elektronische Elemente in die Karte zu integrieren. Zur Gewährleistung der Funktion und des Zusammenspiels der Komponenten ist deren interne Verschaltung erforderlich. Hierzu dienen in einer oder mehreren Ebenen im Kartenkörper angeordnete Leiterbahnen, die ihrerseits an den schaltungstechnisch hierzu bestimmten Stellen miteinander und mit den der externen Kontaktierung dienenden Kontakten in Verbindung gebracht werden müssen.

Aufgabe der vorliegenden Erfindung ist es, eine Kontaktanordnung zu schaffen, welche Kontaktflächen für die externe Kontaktierung einer Smart Card mit einem Host-System ausbildet und dabei gleichzeitig eine Verbindung der in den Kartenkörper eingeordneten Leiterbahnen untereinander sowie mit den externen Kontakten gewährleistet. Dabei soll bei einem fertigungstechnisch einfachen Aufbau der Kontaktanordnung eine hochpräzise Verbindung der sich vorzugsweise selbstjustierenden Kontakte möglich sein.

Die Aufgabe wird durch eine Kontaktanordnung mit den Merkmalen des Hauptanspruchs gelöst. Vorteilhafte Weiterbildungen bzw. Ausgestaltungen der erfindungsgemäßen Kontaktanordnung sind durch die Unteransprüche gegeben.

Die zur Lösung der Aufgabe vorgeschlagene Kontaktanordnung besteht aus einer in einer Aussparung des Kartenkörpers eingebrachten Kontakteinheit, galvanischen Kontaktflächen auf den im Kartenkörper verlaufenden Leiterbahnen sowie Kontaktierungselementen, welche die Kontakteinheit und die Kontaktflächen elektrisch miteinander verbinden. Die aus einem mit einer Metallisierungsschicht versehenen Träger gebildete Kontakteinheit weist in bekannter Weise zur externen Kontaktierung der Smart Card durch eine entsprechende Strukturierung ihrer Metallisierungsschicht auf der dem Kartenkörper abgewandten Oberfläche mehrere ISO-Kontakte auf. Auf der dem Kartenkörper zugewandten Rückseite eines oder mehrerer dieser ISO-Kontakte sind die Kontaktierungselemente zur Verbindung der Kontakteinheit mit den Leiterbahnen in Form aufgebrachter Erhöhungen (Bumps) ausgebildet. Die Bumps sind mit den Kontaktflächen der unterhalb der ISO-Kontakte an die Kontakteinheit herangeführten Leiterbahnen kontaktiert.

Im Sinne der Erfindung kann die zum Aufbau der Kontaktanordnung dienende Kontakteinheit wahlweise als reiner, die elektrische Verbindung der Leiterbahnen untereinander und nach außen gewährleistender Kontakt oder gleichzeitig als Bauelementeträger für einen nach der Flip-Chip-Technologie an der Rückseite ihrer ISO-Kontakte kontaktierten Kartenchip dienen.

Eine mögliche Ausgestaltung der erfindungsgemäßen Kontaktanordnung ist dadurch gegeben, dass die Bumps auf an der dem Kartenkörper zugewandten Rückseite der Kontakteinheit üblicherweise vorhandene Kontaktpads aufgebracht sind. Ebenso können die Bumps aber auch an Stelle der Kontaktpads angeordnet sein. Entsprechend einer vorteilhaften Ausbildung der Erfindung ist zwischen den Kontaktpads und den Bumps eine Diffusionssperre angeordnet. Als Diffusionssperre kommt dabei vorzugsweise eine Ni/Au-Schicht zum Einsatz.

Für die Aufbringung der Bumps auf die Rückseite der ISO-Kontakte kommen unterschiedliche Möglichkeiten in Betracht. Eine Möglichkeit besteht darin, die entsprechenden Erhöhungen galvanisch aufzubringen. Es ist aber auch möglich, die Bumps in Form eines mittels Siebdruck aufgebrachten Materialauftrags auszubilden. Eine weitere Möglichkeit besteht darin, die Bumps durch Lotkugeln, so genannte Spheres, zu realisieren, welche durch Aufschmelzen mit der Rückseite der ISO-Kontakte bzw. den dort vorhandenen Kontaktpads verbunden werden.

Als besonders vorteilhaft ist es anzusehen, dass die Bumps ohne größere technologische Schwierigkeiten beim Herstellen der Verbindung mit den Kontaktflächen auf den Leiterbahnen im Kartenkörper auf die jeweils erforderliche Höhe einstellbar sind. Die Höhe der Bumps kann dabei im Zuge ihres Aufschmelzens kontinuierlich zwischen 50 µm und der Maximalhöhe der Karte eingestellt werden. Die Verbindung der Bumps mit den Kontaktflächen der Leiterbahnen kann mittels verschiedener Technologien erfolgen. Zur Herstellung der Verbindung kommt ein Verkleben mit isotropen oder anisotropen Klebern, ein Aufschmelzen (Verlöten) oder das Bonden (Ultraschallschweißen) der Bumps in Betracht.

Die Erfindung ermöglicht es in besonders vorteilhafter Weise die Vorzüge der Flip-Chip-Technologie als gegenwärtig schnellste, billigste und zuverlässigste Verbindungstechnik zwischen Chip und Kontakteinheit einer Karte mit den Erfordernissen einer Verschaltung weiterer Komponenten einer zur Smart Card erweiterten Chipkarte zu vereinigen. Dabei kombiniert die Erfindung die Verbindungstechnik nach der Flip-Chip-Technologie mit der nach ISO-7810 genormten Kontaktfläche für Smart Cards.

Nachfolgend soll die Erfindung anhand eines Ausführungsbeispiels näher erläutert werden. In der zugehörigen Zeichnungen zeigt:
- Fig.1:: Eine ausschnittweise Darstellung der erfindungsgemäßen Kontaktanordnung;
- Fig. 2:: Eine Kontakteinheit mit Lotbumps und an der Kontakteinheit kontaktiertem Chip.

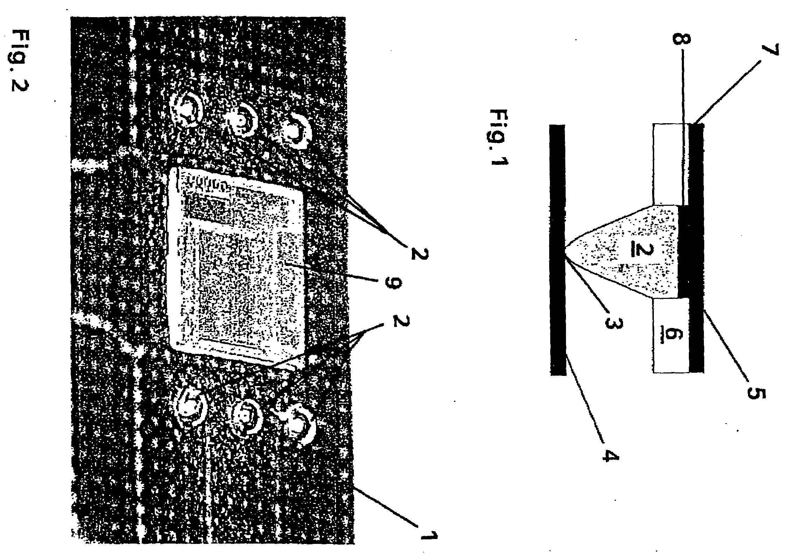

In der Fig. 1 wird der grundsätzliche Gedanke der erfindungsgemäßen Kontaktanordnung in Form einer ausschnittsweisen Darstellung erkennbar. Dargestellt ist ein Teil, der zur externen Kontaktierung und gegebenenfalls zur Verbindung mit einem Mikrochip 9 vorgesehenen Kontakteinheit 1, welche durch einen mit einer Metallisierungsschicht 7 versehenen Träger 6 gebildet ist. Im vorliegenden Beispiel ist dabei auf einen Epoxyträger zur Bildung der ISO-Kontakte 5 für die externe Kontaktierung eine Au/Ni-Schicht aufgebracht. Auf der dem Kartenkörper zugewandten Seite der Kontakteinheit 1 sind in dem Träger 6 Kontaktfenster 10 vorgesehen. Innerhalb der Kontaktfenster 10 werden auf die Rückseiten der ISO-Kontakte 5 die Bumps 2 durch galvanischen Auftrag, Siebdruck oder Aufschmelzen von Lotkugeln aufgebracht. Zwischen der rückseitigen Kontaktfläche der ISO-Kontakte 5 und den Bumps 2 ist in Form einer Ni/Au-Schicht eine Diffusionssperre 8 eingeordnet. Im Zuge der Verbindung der Bumps 2 mit der Kontaktfläche 3 einer Leiterbahn 4 im Inneren des Kartenkörpers werden die Bumps 2 auf die dabei erforderliche Höhe eingestellt. Die Bumps 2 sind so ausgebildet, dass ihre Einstellung in einem Höhenbereich von 50 µm und der maximalen Kartenhöhe möglich ist. Beispielsweise können für die Bumps 2 verwendete Lotkugeln in genau definierten Volumen bis zu Durchmessern von 50 µm hergestellt werden, so dass infolge der Oberflächenspannung nach dem Aufschmelzen eine Selbstjustage an der Kontaktstelle mit der Kontakteinheit 1 erfolgt und sich gleichzeitig ein genau definiertes Höhenprofil einstellt. Durch unterschiedliche Höhen der einzelnen Bumps 2 können ohne Schwierigkeiten in verschiedenen Ebenen des Kartenkörpers angeordnete Leiterbahnen 4 durch eine unmittelbare Durchkontaktierung von der Kontakteinheit 1 aus miteinander verbunden bzw. mit den der externen Kontaktierung dienenden ISO-Kontakten 5 elektrisch leitend verbunden werden. Die Verbindung der Bumps 2 mit den Kontaktflächen 3 auf den Leiterbahnen 4 geschieht durch Verkleben, Aufschmelzen, also Auflöten der Bumps, oder durch Bonden in einem Ultraschallschweißprozess.

Durch die Fig. 2 wird nochmals ein guter Eindruck vom Aufbau der zur Realisierung der erfindungsgemäßen Kontaktanordnung dienenden Kontakteinheit 1 gegeben. Die Abbildung betrifft eine Draufsicht auf die bei der Montage der Kontakteinheit 1 dem Kartenkörper zugewandte Fläche der Einheit 1. In dem dargestellten Beispiel dient die Kontakteinheit 1 außer zur Ausbildung der ISO-Kontakte 5 und der Verbindung der im Inneren des Kartenkörpers angeordneten Leiterbahnen 4 untereinander bzw. mit den ISO-Kontakten 5 gleichzeitig als Bauelementeträger für den nach der Flip-Chip-Technologie mit dem Träger verbundenen Kartenchip 9. Klar zu erkennen sind die auf der Rückseite der ISO-Kontakte 5 angeordneten Lotbumps. Die Metallisierungsfläche 7 der Kontakteinheit ist zur Ausbildung der üblichen 6 bis 8 Kontakte für die externe Kontaktierung durch entsprechende Unterbrechungen 11 der Metallisierungsfläche 7 strukturiert. Die auf der Kartenoberseite durch die Strukturierung ausgebildeten ISO-Kontakte 5 können durch die Erfindung über die Bumps 2 auf beliebige Ebenen des Kartenkörpers durchkontaktiert werden. Bemerkenswert ist dabei, dass der bisher bekannte Aufbau der den Chip tragenden Kontakteinheit im Wesentlichen beibehalten werden kann, so dass, abgesehen von der zur Verbindung der Bumps 2 mit der Kontakteinheit 1 und den Kontaktflächen 3 auf den Leiterbahnen 4 einzusetzenden Verbindungstechnologie, keine wesentlichen Veränderungen der Prozesstechnologie erforderlich sind.

### Bezugszeichenliste

- 1: Kontakteinheit
- 2: Kontaktelement, Bump
- 3: Kontaktfläche
- 4: Leiterbahn
- 5: ISO-Kontakt
- 6: Träger
- 7: Metallisierungsschicht
- 8: Diffusionssperre
- 9: Mikrochip
- 10: Kontaktfenster
- 11: Unterbrechungen

## Patentansprüche

1. Kontaktanordnung für mehrkomponentige Smart Cards, zur Verbindung von in einer oder mehreren Ebenen in den Kartenkörper eingeordneten, die darin integrierten elektrischen und/oder elektronischen Komponenten der Smart Card untereinander verschaltenden Leiterbahnen (4) und zur Bildung von Kontaktflächen (5) für eine externe Kontaktierung der Karte zum Datenaustausch mit einem Hostsystem, bestehend aus einer in eine Aussparrung des Kartenkörpers eingebrachten Kontakteinheit (1), galvanischen Kontaktflächen (3) auf den Leiterbahnen (4) sowie die Kontakteinheit (1) und die Kontaktflächen (3) elektrisch miteinander verbindenden Kontaktierungselementen (2), wobei die Kontakteinheit (1), welche aus einem mit einer Metalisierungsschicht (7) versehenem Träger (6) gebildet ist, zur externen Kontaktierung der Smart Card durch eine entsprechende Strukturierung ihrer Metalisierungsschicht (7) auf der dem Kartenkörper abgewandten Oberfläche mehrere ISO-Kontakte (5) aufweist und die Kontaktierungselemente (2) als auf der dem Kartenkörper zugewandten Rückseite eines oder mehrerer dieser ISO-Kontakte (5) aufgebrachte Erhöhungen (Bumps) ausgebildet und mit den Kontaktflächen (3) der unterhalb der ISO-Kontakte (5) an die Kontakteinheit (1) herangeführten Leiterbahnen (4) kontaktiert sind .

2. Kontaktanordnung nach Anspruch 1, **dadurch gekennzeichnet, dass** die Kontakteinheit (1) gleichzeitig als Bauelementeträger für einen nach der Flip-Chip-Technologie an der Rückseite ihrer ISO-Kontakte (5) kontaktierten Kartenchip (9) dient.

3. Kontaktanordnung nach Anspruch 1 oder 2, **dadurch gekennzeichnet, dass** die Bumps (2) auf an der dem Kartenkörper zugewandten Rückseite der Kontakteinheit (1) vorhandene Kontaktpads aufgebracht sind.

4. Kontaktanordnung nach einem Ansprüche 1 bis 3, **dadurch gekennzeichnet, dass** zwischen der rückseitigen Kontaktierungsfläche der ISO-Kontakte und den Bumps (2) eine Diffusionssperre (8) eingeordnet ist.

5. Kontaktanordnung nach Anspruch 4, **dadurch gekennzeichnet, dass** es sich bei der Diffusionssperre (8) um eine Ni/Au-Schicht handelt.

6. Kontaktanordnung nach einem der Ansprüche 1 bis 5, **dadurch gekennzeichnet, dass** die Bumps (2) als galvanisch aufgebrachte Erhöhungen ausgebildet sind.

7. Kontaktanordnung nach einem der Ansprüche 1 bis 5, **dadurch gekennzeichnet, dass** die Bumps (2) als mittels Siebdruck aufgebrachte Erhöhungen ausgebildet sind.

8. Kontaktanordnung nach einem der Ansprüche 1 bis 5, **dadurch gekennzeichnet, dass** die Bumps (2) als in Form von Lotkugeln (Spheres) aufgebrachte Lotkugeln ausgebildet sind.

9. Kontaktanordnung nach einem der Ansprüche 1 bis 8, **dadurch gekennzeichnet, dass** die Höhe der Bumps (2) entsprechend der Tiefe der mit ihnen zur Verbindung vorgesehenen Leiterbahn (4) im Kartenkörper durch Aufschmelzen zwischen 50 µm und der Maximalhöhe der Karte einstellbar ist.

10. Kontaktanordnung nach einem der Ansprüche 1 bis 9, **dadurch gekennzeichnet, dass** die Bumps (2) mit der Kontaktfläche (3) des zugehörigen Gegenkontaktes einer Leiterbahn (4) verklebt sind.

11. Kontaktanordnung nach einem der Ansprüche 1 bis 9, **dadurch gekennzeichnet, dass** die Bumps (2) mit der Kontaktfläche (3) des zugehörigen Gegenkontaktes einer Leiterbahn (4) durch Aufschmelzen verlötet sind.

12. Kontaktanordnung nach einem der Ansprüche 1 bis 9, **dadurch gekennzeichnet, dass** die Bumps (2) auf die Kontaktfläche (3) des zugehörigen Gegenkontaktes einer Leiterbahn (4) durch Ultraschallschweißen gebondet sind.
